# EUROPEAN PATENT SPECIFICATION

(11) **EP 0 602 136 B1**
(45) Date of publication and mention of the grant of the patent: **02.01.1997**
(21) Application number: 92919031.2
(22) Date of filing: 03.09.1992
(51) Int. Cl.: H02G 3/04, B65H 75/02

(54) **ELECTRICAL CABLE CONTAINMENT**
UMHÜLLUNG FÜR ELEKTRISCHE KABEL
DISPOSITIF DE CONFINEMENT DE CABLE ELECTRIQUE

(30) Priority: 03.09.1991 ZA 916975
(43) Date of publication of application: 22.06.1994
(73) Proprietor: TECHNOLOGY FINANCE CORPORATION (PROPRIETARY) LIMITED, Sandton 2146 Transvaal (ZA)
(72) Inventor: TECHNOLOGY FINANCE CORPORATION (PROPRIETARY) LIMITED, Sandton 2146 Transvaal (ZA)
(74) Representative: Brunner, Michael John
(86) International application number: AU9200467
(87) International publication number: WO9305556

(56) References cited:
- EP-A- 0 197 546
- EP-A- 0 278 923
- EP-A- 0 399 389
- EP-A- 0 403 440
- EP-A- 0 412 233
- WO-A-88/05023
- AU-A- 3 584 289
- AU-A- 5 606 990
- AU-A- 7 275 087
- FR-A- 2 209 235
- FR-A- 2 585 895
- GB-A- 2 168 544
- US-A- 4 475 649
- US-A- 4 937 400
- US-A- 4 988 838
- US-A- 5 024 251

## Description

This invention relates to electrical cable containment. The invention will be particularly described with reference to the containment of electrical cables which attach to the rear of desk top computers and other office type equipment, but it is to be understood that aspects of the invention may have other applications.

Many desk tops support a wide range of electrical equipment. A modern office desk may have, for example, a personal computer, a telephone, and a calculator supported thereon. The computer will have a series of electrical wires or cables connecting thereto including wires which connect the computer to a printer, a central processing unit, or a modem. The wires from these items of equipment tend to be unsightly when viewed from the back of the desk. This problem is not too serious when the desk back is placed against a wall or panel but, especially in open plan offices, such an arrangement of the desk is not always feasible. Where the back of the desk faces into a room or onto a passage the wires present an unattractive sight.

US-A-4988838 and EP-A-412233 disclose a cable protecting apparatus with elements forming cable retaining channels. EP-A-197546 discloses a flexible cable protecting apparatus with enclosed central retaining channel.

According to the present invention, there is provided an electrical cable containment device comprising:
an elongate flexible member having a plurality of containment passages therein which extend the length of the device, each passage having an entrance opening thereto which runs the length of the passage for inserting electrical cable laterally into the passage, the flexible member being formed from a plurality of relatively short elements, characterised by:
each of said elements having male and female connection formations formed on respective opposite ends thereof,
the male connection formation on one element being connectable to the female connection formation of an adjacent element so that adjacent elements are interconnectable end-to-end in a chain-like manner, the connection formations being configured to permit articulated movement between adjacent interconnected elements,
each of said elements comprising a body in which said passages are formed, said body carrying a forwardly projecting connection pin thereon, and a socket formed in the body rearwardly thereof for receiving the connection pin of an adjacent element, the configuration of the pin and socket being such that the respective adjacent elements may be snapped together,
the connection between the body and the pin, or between the pin and the adjacent element, allowing said elements to articulate relative to each other.

Preferably there are at least two containment passages each having its own entrance opening. There is preferably a return lip or other formation which runs the length of the or each passage adjacent the respective opening which in use prevents cables which are within the passage inadvertently coming out of the passage.

The containment device may be made from a resilient flexible material, such as a plastics material, said material being sufficiently flexible to allow the insertion of cables into the passage and the removal of cables from the passage.

The containment device is formed from a multiplicity of interconnected elements which, when connected together, form the elongate flexible member. The elements each carry connection formations thereon which enable the elements to be connected together end-to-end in a chain like manner. Each of the elements has an axially aligned male member mounted on one end thereof and an axially aligned female member formed in the opposite end thereof, the male and female members being shaped and configured such that the male member of one element may be connectable to the female member of an adjacent member to hold adjacent members together, the two elements being movable relative to each other in an articulated manner.

The containment device may be connected to a box for attachment to the rear of an electrical device.

The connection facility may comprise a removable plate with said outlet opening formed therein and an access slot connecting said outlet opening to the edge of the plate for admitting electrical cables into the opening.

Embodiments of the invention are described in detail in the following passages of the specification which refer to the accompanying drawings. The drawings, however, are merely illustrative of how the invention might be put into effect, so that the specific form and arrangement of the various features shown is not to be understood as limiting on the invention.

In the drawings:
Figure 1 shows a perspective view of a containment device and containment box according to the invention fitted to the rear side of an item of electrical equipment;
Figure 2 shows a cross sectional view along line II-II of Figure 1;
Figure 3 shows a side view of a containment box according to the invention;
Figure 4 shows a front perspective view of an element of a further embodiment of a containment device according to the present invention;
Figure 5 shows a rear perspective view of the device shown in Figure 4;
Figure 6 shows a rear end view of the device shown in Figure 4;
Figure 7 shows a side view of three elements of the type shown in Figure 4 connected together;
Figure 8 shows a perspective view of an alternative embodiment of a containment box particularly suitable for having a containment device of the type shown in Figures 4 to 7 connected thereto; and
Figure 9 shows a cross-sectional side view of an alternative embodiment of the invention.

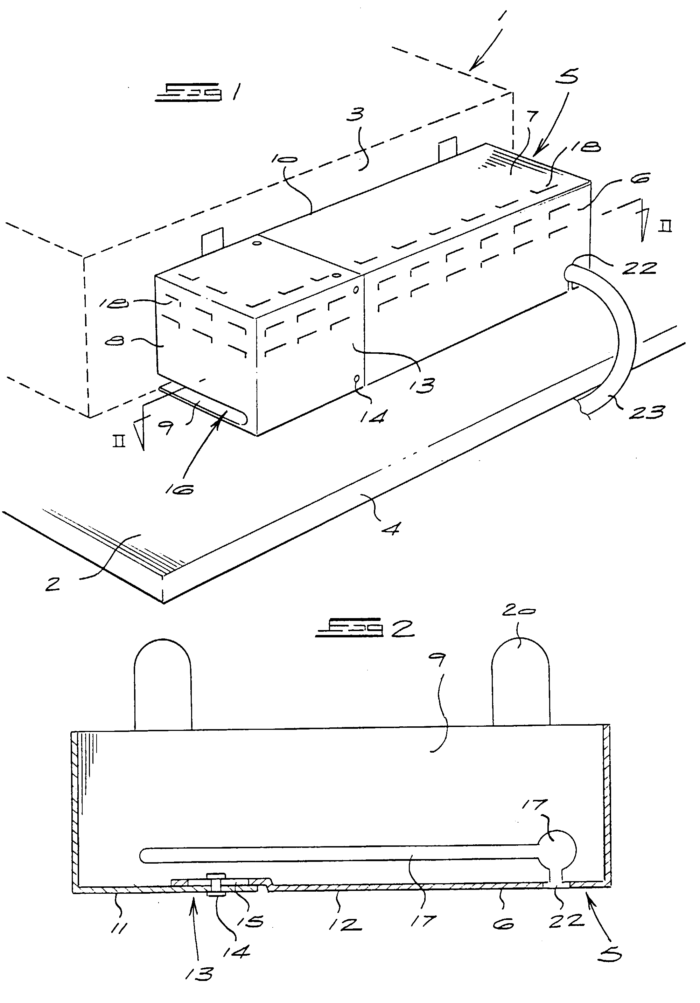

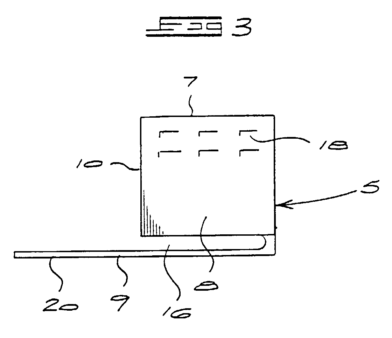

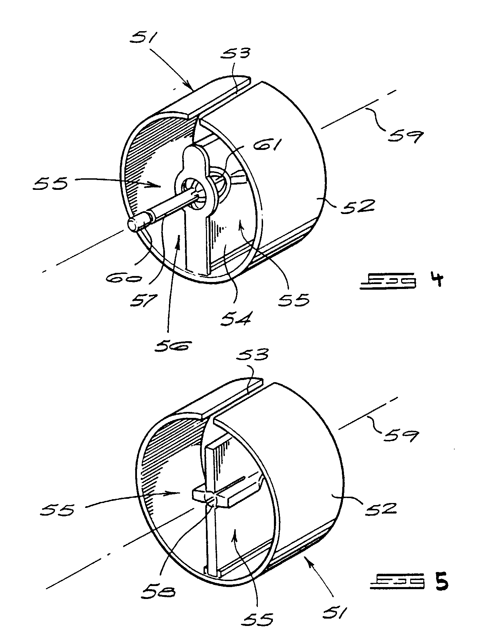

Referring initially to Figures 1, 2 and 3 an item of computer equipment indicated at numeral 1 rests on the upper surface of a desk 2. The rear side 3 of the computer equipment faces towards the back 4 of the desk. The computer equipment 1 may, for example, comprise desk top personal computer. As is well known, a series of electrical cables (not shown) will connect into the back 3 of the computer equipment 1 and this invention is particularly concerned with the containment of those cables.

A containment box 5 is fitted to the back face 3 of the electrical equipment 1. The box 5 includes a back panel 6 a top panel 7, side panels 8, and a floor panel 9. The front side 10 of the box (which is against the computer equipment 1) is open so that any wires or the like which extend from the back 3 of the electrical equipment will pass into the box 5 without interference.

The box 5 may be adjustable in width and/or height. The box depicted in Figures 1 and 2 of the drawings is adjustable in width. As shown clearly in Figure 2 the box 5 is formed in two sections numbered 11 and 12 which overlap each other as indicated at 13 and are held together by a pin 14. The arrangement is such that the two sections 11 and 12 may slide towards or apart from each other and the one section 12 is provided with a slot 15 which limits the extent to which the two sections may be moved together or apart. This adjustment facility is provided so that the width of the box can be varied according to the item of electrical equipment to which it is to be fitted.

The box 5 is preferably provided with a series of openings in the side and/or floor thereof through which electrical cables can pass. As shown in the drawings, at least one side 8 of the box is provided with an opening as indicated at numeral 16. Electrical wires, for example, a telephone or desk top calculator can pass into the opening 16. Thus, the telephone or calculator will sit on the desk alongside the electrical equipment 1 and the wires from the telephone and/or calculator will pass into the box 5 through the side opening 16. In other instances the desk 2 may be provided with electrical wire openings in the upper surface thereof. These wires may, for example, be power cables or the like. The wires which pass up through the surface of the desk 2 may pass into the box 5 through openings 17 in the floor 9 of the box 5.

In many instances the computer equipment 1 to which the box 5 attaches will have a cooling fan connected thereto and therefore the box 5 may be provided with vents as indicated at numeral 18 to allow for the free passage of cooling air through the box to the item of computer equipment. Clearly it is not essential that the box 5 be made to be dimensionally adjustable. Indeed, in certain instances it may be preferable for the box to be custom made for a particular computer or like equipment and in this instance it will be coloured and contoured to conform exactly to the periphery of the respective item.

The box is preferably provided with means for connecting the box to the item of electrical equipment. This may conveniently comprise an extension of the floor panel 9 as indicated at numeral 20. The extension 20 is preferably substantially planar and is adapted to fit underneath the computer equipment 1 so that the computer equipment 1 rests on the extension 20. The extension 20 is preferably sufficiently thin so as not to unduly lift the computer equipment relative to the desk surface. With the computer equipment 1 resting on the extension 20 the box 5 will be firmly held against the back 3 of the computer equipment. Clearly other forms of connection arrangements are possible such as clip connection and the like which connect the box 5 to the back face 3 of the computer equipment.

Once all wires from the desk top including wires from computer equipment have passed into the box 5 they will be gathered together and pass out of the box 5 through an outlet 22 in the back face 6 of the box 5. It will be appreciated that the box 5 will shield the manner in which the electrical wires connect to the computer equipment 1 and thus the box 5 will serve to neaten the appearance of the back face 3 of the computer equipment and the arrangement of wires in that region.

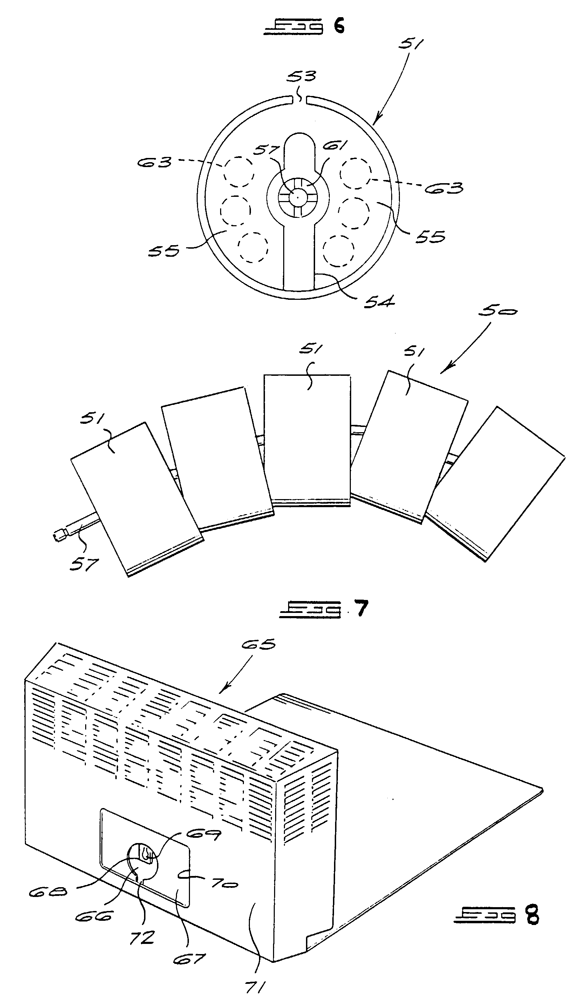

An electrical cable containment device 23 connects to the opening 22. One example form of electrical containment device 51 is depicted in Figure 4 of the drawings.

It is preferred that the device 51 is formed of a resiliently flexible material such as a plastics material so that openings 53 can be widened to insert cables into the passages 55, or remove cables from the passages 55. It will be appreciated that some cables are of larger diameter than other cables and thus it is important that the entrances 53 are able to open sufficiently widely to accommodate a range of cable thicknesses.

It is preferred that there are at least two passages so that different forms of cables may be located in separate passages. For example, power cables may be all located in one of the passages 55 and information conveying cables such as those from telephones and or computers may be conveyed in other passages.

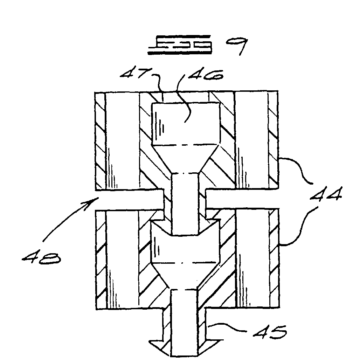

Referring to Figures 4 to 7 of the drawings, an embodiment of a containment device is shown. The containment device indicated by numeral 50 in Figure 7 is comprised of a multiplicity of separable elements 51, each of which is formed of a generally tubular body 52 slit longitudinally, as indicated by slit 53. A mounting bracket 54 is formed within the interior of the tubular body and that bracket 54 divides the interior of the tubular body into two passages 55. The body 52 is formed of a resilient material such as moulded plastics, which is resiliently distortable. To obtain access to the passages the slit 53 is widened by distorting the body outwardly. The slit is located midway between the two passages 55 so that a cable being inserted into the passages can be selectively located in one or other of the two passages as required.

The mounting bracket 54 supports a connecting arrangement 56 for connecting the elements 51 together. The connecting arrangement 56 comprises a male member 57 and a female socket 58 on each element. The male member and female socket both lie on the axis 59 of the elements and adjacent elements are connected together by clipping the distal end 60 of the male member into the female socket of the adjacent member. In this manner a chain of end-to-end elements can be formed which together define a containment device 62 as shown in Figure 7. In a usual application there will be approximately 30 elements per meter of containment device. The length of the containment device can thus be varied to suit any particular application.

There is an articulated connection between adjacent elements. This can be achieved by, for example, making the male member pivotable relative to the mounting bracket, or having the end 60 of the male member pivotable relative to the female socket 58 of the adjacent element. In the present arrangement the proximate end of the male member 57 is coupled to the bracket 54 by a ball and socket type connection 61 which provides the necessary articulation facility and enables adjacent elements to be moved out of axial alignment with each other, as depicted in Figure 7. The passages 55 in the interconnected elements 55 will, of course, be aligned, and be adapted to contain cables as indicated by dotted lines 63 in Figure 6.

A somewhat similar arrangement is shown in Figure 9 but in this arrangement the elements 44 each have a connection formation 45 formed on one end thereof, the connection formations being adapted to fit into a socket 46 on the other end of an adjacent element, the sockets 46 having an entrance lip 47 which ensures that the connection formation 45 engages and is releasably held within the socket 46. A gap 48 is defined between adjacent elements 44 and this gap permits the assembled device to flex in the manner previously described.

The box 65 depicted in Figure 8 has an outlet opening 66 formed in a removable plate 67. The plate 67 has a connection arm 68 mounted thereto having a keyway 69 therein. The male member 57 is shaped to fit into the keyway 69 and engage therewith in order to secure the connection thereto of a containment device 62. Thus, cables from computer equipment will be passed out of the opening 66 and then engaged in a containment device 62 in the manner previously described. The containment device will then be connected to the arm 68 by clipping the male member 57 of the last element into the keyway 69.

The plate 67 is removable from the rest of the box. Once removed a large rectangular opening 70 is defined in the back wall 71 of the box. The plate 67 has a transverse slot 72 extending between the edge of the plate and the outlet opening 66. The cables will be passed along this slot 72 to locate them in this outlet opening prior to fitting the containment device 62 thereto. This arrangement will simplify the fitting of the cables into the outlet opening.

Any suitable arrangement may be made for connecting the opposite end of the containment device to the wall or other connection point where mains sockets and other connection sockets are located. Those sockets may be shielded by a suitable box or panel (not shown) which may have a male member similar to that of the elements 51 for connection to the containment device 62.

## Claims

1. An electrical cable containment device (50) comprising:
an elongate flexible member (50) having a plurality of containment passages (55) therein which extend the length of the device, each passage having an entrance (53) opening thereto which runs the length of the passage for inserting electrical cable laterally into the passage, the flexible member being formed from a plurality of relatively short elements (51), characterised by
each of said elements having male (57) and female (58) connection formations formed on respective opposite ends thereof,
the male connection formation on one element being connectable to the female connection formation of an adjacent element so that adjacent elements are interconnectable end-to-end in a chain-like manner, the connection formations being configured to permit articulated movement between adjacent interconnected elements,
each of said elements comprising a body (52) in which said passages are formed, said body carrying a forwardly projecting connection pin (57) thereon, and a socket (58) formed in the body rearwardly thereof for receiving the connection pin of an adjacent element, the configuration of the pin and socket being such that the respective adjacent elements may be snapped together,
the connection between the body and the pin, or between the pin and the adjacent element, allowing said elements to articulate relative to each other.

2. An electrical cable containment device (50) according to claim 1, wherein the connection formations lie on the longitudinal centreline of the device, and the connection formations are configured to permit adjacent elements to move out of alignment with each other through a predetermined maximum arc.

3. An electric cable containment device (50) according to either preceding claim 1 or claim 2, wherein a single entrance opening (53) provides access to all containment passages (55).

4. An electrical cable containment device (50) according to any of the preceding claims wherein the connection pin (57) has a proximal end which is connected to the body (52) via an articulated connection.

5. An electrical cable containment device (50) according to claim 4, wherein the proximal end of the connection pin (57) has a spherically shaped formation thereon, and the body (52) has a retaining formation thereon for holding the pin to the body in a manner which allows the pin to articulate about the spherically shaped formation.

6. An electrical cable containment device (50) according to any of the preceding claims, wherein the elements (51) are formed from a resiliently flexible plastics material, the resilience of the material being such that the elements can be resiliently flexed to enlarge the entrance opening (53) thereto to facilitate the insertion and removal of electrical cables into or from the respective containment passages.

7. An element (51) for an electrical cable containment device (50) according to any of the preceding claims.

8. An electrical cable containment apparatus comprising:
an enclosure (65) for attachment to the rear of electrical equipment having a plurality of electrical cables for confining the cables therein, the enclosure comprising:
a cable containment device (50) according to any of claims 1 to 6; and
means for retaining the enclosure relative to the equipment.

## Patentansprüche

1. Vorrichtung (50) zur Umhüllung von elektrischen Kabeln, enthaltend
ein längliches flexibles Bauelement (50), mit einer Anzahl von Durchgängen (55) zur Umhüllung vorgesehen sind, welche sich über die Länge der Vorrichtung erstrecken, wobei jeder Durchgang eine Eingangsöffnung (53) aufweist, welche sich über die Länge des Durchgangs erstreckt, um elektrische Kabel quer in diesen Durchgang einzuführen und wobei das flexible Bauelement aus einer Anzahl von vergleichsweise kurzen Elementen (51) gebildet wird, dadurch gekennzeichnet,
daß jedes der genannten Elemente steckerartige (57) und buchsenartige (58) Verbindungsteile aufweist, welche jeweils an den entsprechend entgegengesetzten Enden derselben vorgesehen sind,
daß die steckerartigen Verbindungsteile des einen Elements mit den buchsenartigen Verbindungsteilen eines anschließenden Elements verbindbar sind, so daß die aufeinanderfolgenden Elemente an ihren Enden nach Art einer Kette miteinander verbindbar sind, wobei die Verbindungselemente derart ausgebildet sind, daß eine gelenkartige Bewegung zwischen den aufeinander folgenden und miteinander verbundenen Elementen ermöglicht wird,
daß jedes der genannten Elemente einen Körper (52) aufweist, in welchen die genannten Durchgänge geformt sind, wobei der genannte Körper einen nach vorne sich erstreckenden Verbindungsstift (57) und an seinem rückseitigen Ende eine Buchse (58) zur Aufnahme des Verbindungsstifts des anschließenden Elementes aufweist, wobei die Ausbildung des Stiftes und der Buchse derart vorgesehen ist, daß die entsprechenden aufeinander folgenden Elemente ineinander einschnappen können,
und daß die Verbindung zwischen dem Körper und dem Stift oder zwischen dem Stift und dem anschließenden Element den genannten Elementen Relativbewegungen nach Art eines Gelenkes zueinander ermöglicht.

2. Vorrichtung (50) zur Umhüllung von elektrischen Kabeln nach Anspruch 1, wobei die Verbindungsteile auf der mittleren Längsachse der Vorrichtung liegen und die Verbindungsteile derart ausgebildet sind, daß aufeinander folgende Elemente aus der gegenseitigen Ausrichtung über einem vorgegebenen maximalen Bogen herausbewegbar sind.

3. Vorrichtung (50) zur Umhüllung von elektrischen Kabeln nach einem der vorhergehenden Ansprüche 1 oder 2, wobei eine einzige Eingangsöffnung (53) den Zugang zu allen Durchgängen (55) ermöglicht.

4. Vorrichtung (50) zur Umhüllung von elektrischen Kabeln nach irgendeinem der vorhergehenden Ansprüche, wobei der Verbindungsstift (57) ein inneres Ende hat, welches mit dem Körper (52) über eine gelenkartige Verbindung verbunden ist.

5. Vorrichtung (50) zur Umhüllung von elektrischen Kabeln nach Anspruch 4, wobei das innere Ende des Verbindungsstiftes (57) einen sphärisch geformten Bereich aufweist und der Körper (52) einen Aufnahmebereich zum Festhalten des Stiftes auf dem Körper derart aufweist, daß der Stift gelenkig bewegbar bezüglich des sphärisch geformten Bereiches angeordnet ist.

6. Vorrichtung (50) zur Umhüllung von elektrischen Kabeln nach einem der vorhergehenden Ansprüche, wobei die Elemente (51) aus nachgiebigem, flexiblem Kunststoffmaterial gebildet sind und wobei die Nachgiebigkeit des Materials derart vorgegeben ist, daß die Elemente nachgiebig und biegbar zur Vergrößerung der Eingangsöffnung (53) ausgebildet sind, um das Einfügen und das Entfernen von elektrischem Kabel in oder aus dem entsprechenden Durchgang zur Umhüllung zu erleichtern.

7. Ein Element (51) für eine Vorrichtung (50) zur Umhüllung eines elektrischen Kabels nach einem der vorhergehenden Ansprüche.

8. Anordnung zur Umhüllung von elektrischen Kabeln enthaltend ein Gehäuse (65) zur Befestigung an der Rückseite einer elektrischen Einrichtung, mit einer Anzahl von elektrischen Kabeln, wobei das Gehäuse zur Aufnahme der elektrischen Kabel dient und eine Vorrichtung (50) zur Umhüllung von Kabeln nach einem der Ansprüche 1 bis 6 und ferner Mittel zur Befestigung des Gehäuses bezüglich der Einrichtung enthält.

## Revendications

1. Dispositif (50) de confinement de câbles électriques comprenant :
un élément flexible allongé (50) comportant une série de passages de confinement (55) qui s'étendent sur la longueur du dispositif, chaque passage ayant une ouverture d'entrée (53) qui court sur la longueur du passage pour insérer un câble électrique latéralement dans le passage, l'élément flexible étant formé d'une série d'éléments relativement courts (51), caractérisé par les aspects suivants :
chacun desdits éléments a des structures de connexion mâle (57) et femelle (58) formées sur leurs extrémités opposées respectives,
la structure de connexion mâle d'un élément peut être connectée à la structure de connexion femelle d'un élément voisin de telle sorte que des éléments voisins soient interconnectés bout à bout à la manière d'une chaîne, les structures de connexion étant configurées pour permettre un mouvement articulé entre des éléments interconnectés voisins,
chacun desdits éléments comprend un corps (52) dans lequel lesdits passages sont formés, ledit corps portant une broche de connexion (57) faisant saillie en avant, et une douille (58) formée dans le corps à l'arrière de celui-ci pour recevoir la broche de connexion d'un élément voisin, la configuration de la broche et de la douille étant telle que les éléments voisins respectifs puissent être encliquetés l'un sur l'autre,
la connexion entre le corps et la broche ou entre la broche et l'élément voisin permet auxdits éléments de s'articuler l'un par rapport à l'autre.

2. Dispositif (50) de confinement de câbles électriques selon la revendication 1, dans lequel les structures de connexion se situent sur l'axe longitudinal du dispositif et les structures de connexion sont configurées pour permettre à des éléments voisins de se déplacer hors de leur alignement mutuel sur un arc maximum prédéterminé.

3. Dispositif (50) de confinement de câbles électriques selon l'une quelconque des revendications 1 et 2, dans lequel une seule ouverture d'entrée (53) offre un accès à tous les passages de confinement (55).

4. Dispositif (50) de confinement de câbles électriques selon l'une quelconque des revendications précédentes, dans lequel la broche de connexion (57) a une extrémité proximale qui est connectée au corps (52) via une connexion articulée.

5. Dispositif (50) de confinement de câbles électriques selon la revendication 4, dans lequel l'extrémité proximale de la broche de connexion (57) présente une structure de forme sphérique, et le corps (52) présente une structure de retenue pour maintenir la broche sur le corps d'une manière qui permet à la broche de s'articuler autour de la structure de forme sphérique.

6. Dispositif (50) de confinement de câbles électriques selon l'une quelconque des revendications précédentes, dans lequel les éléments (51) sont formés d'une matière plastique élastique et flexible, l'élasticité de la matière étant telle que les éléments puissent être fléchis de manière élastique pour élargir l'ouverture d'entrée (53) afin de faciliter l'insertion et le retrait de câbles électriques dans les passages de confinement respectifs.

7. Elément (51) destiné à un dispositif (50) de confinement de câbles électriques selon l'une quelconque des revendications précédentes.

8. Appareil de confinement de câbles électriques comprenant :
une enceinte (65) pour fixer à l'arrière de l'équipement électrique, ayant une série de câbles électriques, pour y confiner les câbles, l'enceinte comprenant :
un dispositif (50) de confinement de câbles selon l'une quelconque des revendications 1 à 6, et
des moyens pour retenir l'enceinte par rapport à l'équipement.
